# EUROPEAN PATENT APPLICATION

(11) **EP 4 459 320 A1**
(43) Date of publication of application: **06.11.2024**
(21) Application number: 22913176.8
(22) Date of filing: 15.06.2022
(51) Int. Cl.: G01S 7/4863, G01S 17/08

(54) **LASER RADAR DETECTION METHOD AND LASER RADAR**

(30) Priority: 28.12.2021 CN 202111632764
(71) Applicant: Hesai Technology Co., Ltd., Shanghai, 201815 (CN)
(72) Inventor: ZHANG, Hongyan, Shanghai 201815 (CN); XIANG, Shaoqing, Shanghai 201815 (CN)
(74) Representative: Fish & Richardson P.C.
(86) International application number: PCT/CN2022/098785
(87) International publication number: WO 2023/123887

(57) **Abstract**

A detection method of a LiDAR and a LiDAR are provided. An emitter module of the LiDAR includes multiple emitter units, a detector module of the LiDAR includes multiple detector units, there is one-to-one correspondence between the multiple detector units and the multiple emitter units, the detector unit includes multiple detector groups. The detection method includes: sampling a signal outputted from each detector group, to determine a sampling result corresponding to each detector group; and determining a point cloud map based on sampling results corresponding to all of the detector groups. Based on the technical solutions of this disclosure, point cloud density can be increased without increasing emission energy of the LiDAR, without increasing receiving area of the detectors, and without changing optical-mechanical structure of the LiDAR.

## Description

### DETECTION METHOD OF LIDAR AND LIDAR

This application claims priority to Chinese Patent Application No. 2021116327649 titled "DETECTION METHOD OF LIDAR AND LIDAR" and filed with the China National Intellectual Property Administration on December 28, 2021, the content of which is incorporated herein by reference in its entirety.

### TECHNICAL FIELD

This disclosure relates to laser detection and, in particular, to a detection method of a LiDAR and a LiDAR.

### BACKGROUND

A LiDAR is a commonly used ranging sensor characterized by long detection range, high resolution, less environmental interference, or the like, and is widely used in the fields such as smart robots, unmanned aerial vehicles, autonomous driving, or the like. The working principle of a LiDAR is to use time spent for laser on travel to and from between a radar and a target, or a frequency shift produced by frequency modulated continuous light during travel to and from between the radar and the target, to evaluate information such as a distance or speed of the target, or the like.

The LiDAR emits detection light into a three-dimensional space. The detection light forms an echo signal after being reflected from a to-be-detected object. The LiDAR receives the echo signal to determine a point cloud map. Point cloud density of the point cloud map is an important index parameter to measure performance of the LiDAR. Increasing the point cloud density helps to accurately identify a target.

However, existing methods for increasing the point cloud density have problems such as increasing physical size of the radar, and resulting in high costs, complex optical-mechanical structure of the LiDAR, or the like. In such a case, it is greatly difficult to increase the point cloud density of the LiDAR, causing a problem of low point cloud density of the LiDAR.

### SUMMARY

In this disclosure, a detection method of a LiDAR and a LiDAR are provided to increase the point cloud density.

In a first aspect,, an embodiment of this disclosure provides a detection method of a LiDAR. An emitter module of the LiDAR includes multiple emitter units, a detector module of the LiDAR includes multiple detector units, there is one-to-one correspondence between the multiple detector units and the multiple emitter units, the detector unit includes multiple detector groups; and the detection method includes: sampling a signal outputted from each detector group, to determine a sampling result corresponding to the each detector group; and determining a point cloud map based on sampling results corresponding to all of the detector groups.

Optionally, the detection method further includes: combining sampling results corresponding to multiple adjacent detector groups to determine mixed channel data, after determining the sampling result corresponding to each detector group and before determining the point cloud map. The multiple detector groups belong to different detector units. At the step of determining the point cloud map, the point cloud map is determined based on the mixed channel data.

Optionally, each of the detector groups includes multiple detectors; and each of the detectors is an independently addressed or independently controlled detector.

Optionally, at the step of combining the sampling results corresponding to the multiple adjacent detector groups, the multiple detector groups combined to determine the different mixed channel data each includes an equal number of detectors.

Optionally, the detector includes a single photon avalanche diode.

Optionally, the step of sampling the signal outputted from each detector group includes: performing histogram sampling on the signal outputted from each detector group, and the determined sampling result is a histogram corresponding to each detector group. At the step of combining the sampling results corresponding to the multiple adjacent detector groups, the histogram corresponding to each detector group is accumulated.

Optionally, each of the detector units includes: detectors in a rows and b columns, where a and b are each a positive integer, and at least one of a and b is greater than 1. At the step of combining the sampling results corresponding to the multiple adjacent detector groups, the multiple combined detector groups include: detectors in a rows and b columns.

Optionally, the multiple detector units are arranged along a first direction.

Optionally, at the step of combining the sampling results corresponding to the multiple adjacent detector groups, sampling results corresponding to the multiple adjacent detector groups along the first direction are combined.

Optionally, the LiDAR includes a scanner, the scanner rotates detection light generated by the emitter module around a rotating shaft to implement scanning; and the first direction corresponds to a direction of the rotating shaft.

Optionally, the LiDAR is an integrally rotatory LiDAR or a rotating mirror LiDAR.

Optionally, each of the detector units includes: detector groups in multiple rows and multiple columns; and the step of determining the mixed channel data includes: combining sampling results corresponding to adjacent detector groups in the multiple rows to determine row mixed channel data, detector groups in the multiple rows belonging to different detector units arranged along a row direction; and combining sampling results corresponding to adjacent detector groups in the multiple columns to determine column mixed channel data, detector groups in the multiple columns belonging to different detector units arranged along a column direction.

Optionally, the detection method further includes: combining sampling results corresponding to multiple detector groups in a same detector unit to determine net channel data; and determining the point cloud map based on the net channel data and the mixed channel data.

Accordingly, this disclosure further provides a LiDAR, including: an emitter module including multiple emitter units; a detector module including multiple detector units, there being one-to-one correspondence between the multiple detector units and the multiple emitter units, each of the detector units including multiple detector groups; and a processor configured to implement the detection method of this disclosure.

In addition, this disclosure further provides a LiDAR. An emitter module of the LiDAR includes multiple emitter units, a detector module of the LiDAR includes multiple detector units, there is one-to-one correspondence between the multiple detector units and the multiple emitter units, each of the detector units includes multiple detector groups; and the LiDAR further includes: a sampler configured to sample a signal outputted from each detector group, to determine a sampling result corresponding to the each detector group; and a mapper configured to determine a point cloud map based on sampling results corresponding to all of the detector groups.

Optionally, the LiDAR further includes: a combiner configured to combine sampling results corresponding to multiple adjacent detector groups to determine mixed channel data. The multiple detector groups belong to different detector units; and the mapper determines the point cloud map based on the mixed channel data.

Optionally, each of the detector groups includes multiple detectors; and each of the detectors is an independently addressed or independently controlled detector.

Optionally, the multiple detector groups combined by the combiner to determine different mixed channel data each includes an equal number of detectors.

Optionally, the detector includes a single photon avalanche diode.

Optionally, each of the detector units includes: detectors in a rows and b columns, where a and b are each a positive integer, and at least one of a and b is greater than 1. The multiple detector groups combined by the combiner include: detectors in a rows and b columns.

Optionally, the multiple detector units are arranged along a first direction.

Optionally, the combiner combines sampling results corresponding to multiple adjacent detector groups along the first direction.

Optionally, the LiDAR includes a scanner, the scanner rotates detection light generated by the emitter module around a rotating shaft to implement scanning; and the first direction corresponds to a direction of the rotating shaft.

Optionally, the LiDAR is an integrally rotatory LiDAR or a rotating mirror LiDAR.

Optionally, each of the detector units includes: detector groups in multiple rows and multiple columns; and the combiner includes: a row combiner configured to combine sampling results corresponding to adjacent detector groups in the multiple rows to determine row mixed channel data, detector groups in the multiple rows belonging to different detector units arranged along a row direction; and a column combiner configured to combine sampling results corresponding to adjacent detector groups in the multiple columns to determine column mixed channel data, detector groups in the multiple columns belonging to different detector units arranged along a column direction.

Compared with existing techniques, technical solutions of this disclosure have the following advantages:

In the technical solutions of this disclosure, one of the detector units corresponds to one of the emitter units to form physical channels; the signal outputted from each detector group is sampled to determine a sampling result, and the point cloud map is determined based on sampling results of all of the detector groups. The multiple detector units and the multiple emitter units with one-to-one correspondence therebetween to form the physical channels, that is, one of the detector units and a corresponding emitter unit have a same field of view in a far field. In such a case, the number of the detector units is equal to the number of the emitter units. Each of the detector units includes multiple detector groups, and accordingly, the number of the detector groups is bound to be greater than the number of the detector units, and also greater than the number of the emitter units. In such a case, the density of the point cloud map determined based on the sampling results of all of the detector groups is higher, that is, the point cloud density of the determined point cloud map is increased. In such a case, the implementation of determining the point cloud map using the sampling result determined based on the signal outputted from each detector group can increase the point cloud density without increasing emission energy of the LiDAR, without increasing receiving area of the detectors, and without changing optical-mechanical structure of the LiDAR.

In an optional solution of this disclosure, sampling results corresponding to multiple adjacent detector groups are combined to determine mixed channel data, after determining the sampling result corresponding to each detector group and before determining the point cloud map. The multiple detector groups belong to different detector units. The determination of the mixed channel data is equivalent to increase of the number of detector units, and the mixed channel data is used to increase the density based on real sampled waveforms, which can effectively enhance the detection capacity for small signals, specifically can effectively enhance detection for small signals at a middle position of a field of view corresponding to adjacent physical channels, and is conductive to improving the detection capacity.

In another aspect, the detector unit includes: detectors in a rows and b columns, where a and b are each a positive integer, and at least one of a and b is greater than 1. At the step of combining the sampling results corresponding to the multiple adjacent detector groups, the multiple combined detector groups include: detectors in a rows and b columns. In a process of combining the sampling results, the number and area of the detectors included in the multiple combined detector groups are equal to the number and area of the detectors in the detector unit, in such a case, the sampling area can be improved or ensured effectively, and the ranging capacity can be improved or ensured advantageously, that is to say, the determination of the mixed channel data improves the detection capacity without affecting the ranging performance.

### BRIEF DESCRIPTION OF DRAWINGS

To more clearly describe the embodiments of this disclosure or the existing technologies, the drawings to be used in the description of the embodiments or the prior art are briefly introduced below. Apparently, the drawings described below are merely some embodiments of this disclosure. For those of ordinary skills in the art, other drawings may also be obtained based on these drawings without making creative work.
FIG. 1 shows a schematic structural diagram of an emitter module and a detector module of a LiDAR;
FIG. 2 shows a schematic structural diagram of a SPAD array in the detector module of the LiDAR shown in FIG. 1;
FIG. 3 shows two physical channels in the LiDAR shown in FIG. 1;
FIG. 4 shows a schematic flowchart of a detection method of a LiDAR, in an embodiment of this disclosure;
FIG. 5 shows a schematic structural diagram of an emitter module and a detector module of the LiDAR used in the detection method of a LiDAR shown in the embodiment of FIG. 4;
FIG. 6 shows a schematic structural diagram of two detector units in the detection method of a LiDAR shown in the embodiment of FIG. 5;
FIG. 7 shows a schematic diagram of a combination of the two detector units to determine mixed channel data in the detection method of a LiDAR shown in the embodiment of FIG. 6;
FIG. 8 shows a schematic diagram of a combination of the two detector units to determine a piece of net channel data in the detection method of a LiDAR shown in the embodiment of FIG. 6;
FIG. 9 shows a schematic diagram of a combination of the two detector units to determine another piece of net channel data in the detection method of a LiDAR shown in the embodiment of FIG. 6;
FIG. 10 shows a schematic diagram of a light path for increasing point cloud density along a vertical direction in the detection method of a LiDAR shown in the embodiment of FIG. 6;
FIG. 11 shows a schematic structural diagram of two detector units in an example detection method of a LiDAR, consistent with some embodiments of this disclosure;
FIG. 12 shows a schematic diagram of three example detector units of a LiDAR, consistent with some embodiments of this disclosure;
FIG. 13 shows a schematic structural diagram of two detector units in a detection method of a LiDAR, in yet another embodiment of this disclosure;
FIG. 14 shows a schematic diagram of a combination of the two detector units to determine a piece of mixed channel data in the detection method of a LiDAR shown in the embodiment of FIG. 13;
FIG. 15 shows a schematic diagram of a combination of the two detector units to determine another piece of mixed channel data in the detection method of a LiDAR shown in the embodiment of FIG. 13;
FIG. 16 shows a schematic diagram of a combination of the two detector units to determine a piece of net channel data in the detection method of a LiDAR shown in the embodiment of FIG. 13;
FIG. 17 shows a schematic diagram of a combination of the two detector units to determine another piece of net channel data in the detection method of a LiDAR shown in the embodiment of FIG. 13;
FIG. 18 shows a schematic structural diagram of two detector units in a detection method of a LiDAR, in yet another embodiment of this disclosure;
FIG. 19 shows a schematic structural diagram of detector groups in the two detector units in the detection method of a LiDAR shown in the embodiment of FIG. 18;
FIG. 20 shows a schematic diagram of a combination of the two detector units to determine mixed channel data in the detection method of a LiDAR shown in the embodiment of FIG. 18;
FIG. 21 shows a schematic diagram of a combination of the two detector units to determine a piece of net channel data in the detection method of a LiDAR shown in the embodiment of FIG. 18;
FIG. 22 shows a schematic diagram of a combination of the two detector units to determine another piece of net channel data in the detection method of a LiDAR shown in the embodiment of FIG. 18;
FIG. 23 shows a schematic diagram of a light path for increasing point cloud density along a horizontal direction in the detection method of a LiDAR shown in the embodiment of FIG. 18; and
FIG. 24 shows a functional block diagram of a LiDAR, in an embodiment of this disclosure.

### DETAILED DESCRIPTION

As can be known from the BACKGROUND, a LiDAR in the existing techniques has a problem of low point cloud density. Here, reasons for the problem of low point cloud density are analyzed based on a detection method of a LiDAR:

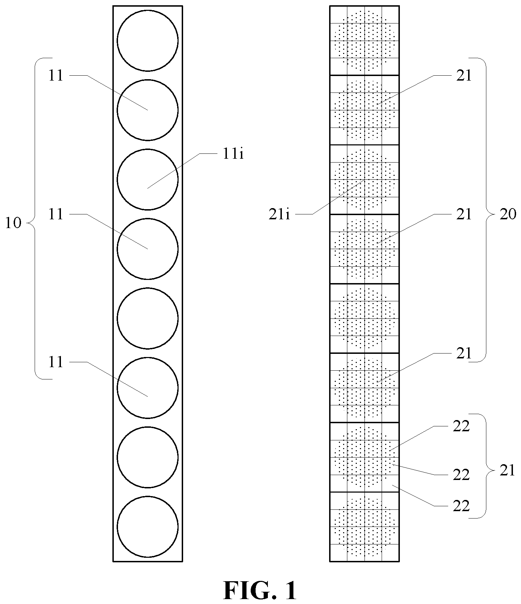

Referring to FIG. 1, a schematic structural diagram of an emitter module and a detector module of a LiDAR is shown.

The emitter module 10 of the LiDAR includes multiple emitter units 11; the detector module 20 of the LiDAR includes multiple detector units 21, and there is one-to-one correspondence between the multiple detector units 11 and the multiple emitter units 21. One of the emitter units 11 and a corresponding detector unit 21 have a same field of view in a far field, and accordingly, a physical channel is formed between the emitter unit 11 and the corresponding detector unit 21.

Specifically, the LiDAR shown in FIG. 1 includes eight physical channels, that is, the emitter module 10 includes eight emitter units 11, namely 1st, 2nd, 3rd, ..., and 8th emitter units, the detector module 20 includes eight detector units 21, namely 1st, 2nd, 3rd, ..., and 8th detector units, and there is one-to-one correspondence between the eight emitter units 11 and the eight detector units 21. Detection light generated by an emitter unit 11i of an i-th channel forms an echo after being reflected from an obstacle outside the radar, and the echo is received by a detector unit 21i of the i-th channel. The detector unit 21 includes several detectors 22. Specifically, the detector 22 may include: a single photon avalanche diode ("SPAD") device.

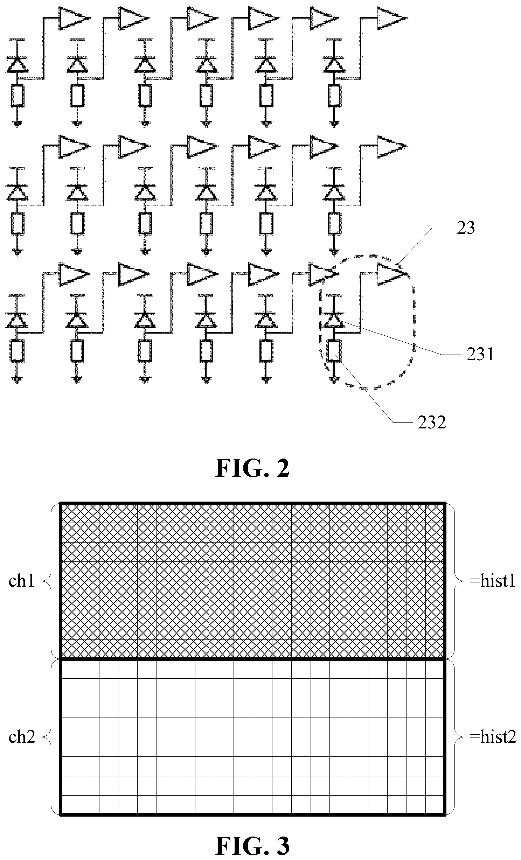

Referring to FIG. 2, a schematic structural diagram of a SPAD array in the detector module of the LiDAR shown in FIG. 1 is shown.

Each of the detector units includes several detectors. Dashed box 23 shows a structure of a detector, including: a SPAD 231 and a quenching resistor 232. Each of the detectors can be independently addressed or independently controlled. That is to say, each detector can be independently powered on, independently led out, and can be only powered on or only read a signal generated by a SPAD on a particular address line.

An example of the two physical channels in the LiDAR shown in FIG. 1 is illustrated.

Referring to FIG. 3, two physical channels in the LiDAR shown in FIG. 1 are shown.

FIG. 3 shows a physical channel ch1 and a physical channel ch2. When the LiDAR performs detection, the detector module performs histogram sampling after receiving an echo, and can determine two histograms, namely histograms hist1 and hist2, based on output signals (that is, accumulated result of outputs from all of SPADs in the detector units) from a detector unit of the physical channel ch1 and a detector unit of the physical channel ch2. The histograms hist1 and hist2 correspond to a detection result of the physical channel ch1 and a detection result of the physical channel ch2 respectively. In this case, they correspond to the two physical channels in real.

It can be seen that the number of physical channels formed by the emitter units and the detector units of the LiDAR with one-to-one correspondence therebetween is limited.

At present, the point cloud density can be increased in several ways. One way is to increase the number of physical channels, that is, to increase the numbers of emitter units and detector units. However, this can increase the physical size of the LiDAR, and can increase the costs of the LiDAR. Another way is to increase the density by direct interpolation based on point cloud data. However, because the interpolation is performed based on the point cloud data, point cloud interpolation may not always reflect the real situation of the object, for a signal with a weak intensity or a small target.

To solve the technical problems, this disclosure provide a detection method of a LiDAR. An emitter module of the LiDAR includes multiple emitter units, a detector module of the LiDAR includes: multiple detector units, there is one-to-one correspondence between the multiple detector units and the multiple emitter units, each of the detector units includes: multiple detector groups; and the detection method includes: sampling a signal outputted from each detector group, to determine a sampling result corresponding to the each detector group; and determining a point cloud map based on sampling results corresponding to all of the detector groups.

This disclosure may increase point cloud density without increasing emission energy of the LiDAR, without increasing receiving area of the detectors, and without changing optical-mechanical structure of the LiDAR.

To make the above objects, features, and advantages of this disclosure clearer and understandable, specific embodiments of this disclosure are described in detail below with reference to the drawings.

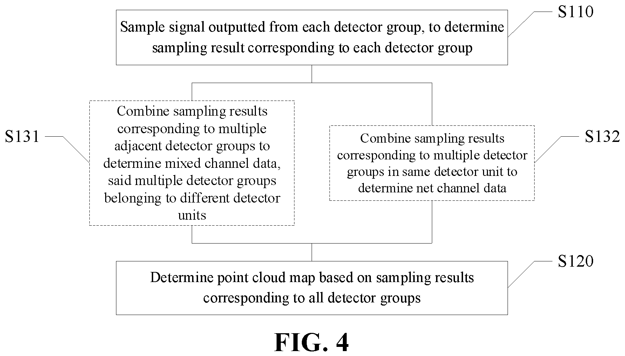

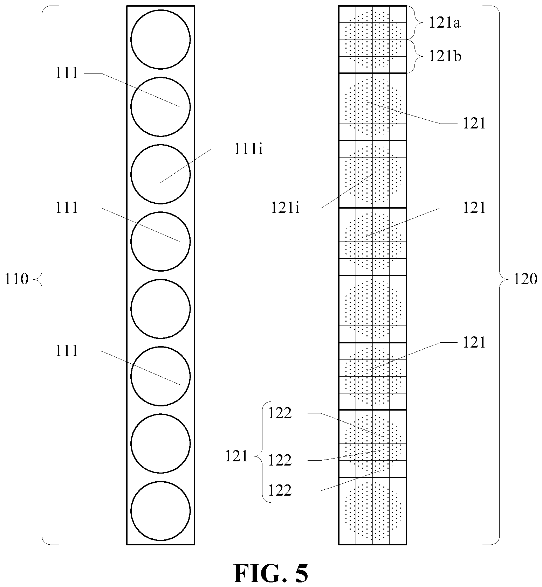

Referring to FIGS. 4 and 5, FIG. 4 shows a schematic flowchart of a detection method of a LiDAR consistent with some an embodiment of this disclosure; and FIG. 5 shows a schematic structural diagram of an emitter module and a detector module of the LiDAR used in the detection method of a LiDAR consistent with some the embodiment of FIG. 4.

The emitter module 110 of the LiDAR includes multiple emitter units 111. The detector module 120 of the LiDAR includes multiple detector units 121. There is one-to-one correspondence between the multiple detector units 121 and the multiple emitter units 111, and The detector unit 121 includes multiple detector groups (not shown in the figure).

The emitter module 110 of the LiDAR is configured to generate detection light. The emitter module 110 includes multiple emitter units 111, and each of the emitter units 111 generates a detection light beam. The detection light generated by each emitter unit 111 covers a certain field range in a far field, that is, each emitter unit 111 corresponds to a field range in the far field.

The detector module 120 of the LiDAR is configured to receive echo light formed after the detection light is reflected. The detector module 120 includes multiple detector units 121. Each of the detector units 121 can receive the echo light within a certain field range in the far field, that is, each of the detector units 121 also corresponds to a field range in the far field.

There is one-to-one correspondence between the multiple detector units 121 and the multiple emitter units 111, that is, one of the detector units 121 and a corresponding emitter unit 111 have a same corresponding field of view in the far field. In such a case, the detector unit 121 and the corresponding emitter unit 111 form a physical channel.

Specifically, the emitter module 110 and the detector module 120 of the LiDAR shown in FIG. 5 include eight physical channels, that is, the emitter module 110 includes eight emitter units 111, namely 1st, 2nd, 3rd, ..., and 8th emitter units, and the detector module 120 includes eight detector units 121, namely 1st, 2nd, 3rd, ..., and 8th detector units.

There is one-to-one correspondence between the eight emitter units 111 and the eight detector units 121. Detection light generated by an emitter unit 111i of an i-th channel forms an echo after being reflected from an obstacle outside the radar, and the echo is received by a detector unit 121i of the i-th channel.

Specifically, the detector unit 121 includes multiple detectors 122. Each of the detectors 122 is an independently addressed or independently controlled detector. That is to say, each of the detectors 122 can be independently powered on, independently led out. In some embodiments of this disclosure, the detector 122 may include: a single photon avalanche diode ("SPAD" device).

The detector unit 121 includes multiple detector groups. Each of the detector groups includes two or more of the detectors 122. Specifically, in the embodiment shown in FIG. 5, the detector unit 121 includes two detector groups, namely detector group 121a and detector group 121b.

It should be noted that, as shown in FIG. 5, in some embodiments of this disclosure, the multiple detector units 121 are arranged along a first direction. That is to say, the multiple detector units 121 form a one-dimensional array along the first direction.

In addition, to implement scanning of a full field of view, in some embodiments of this disclosure, the LiDAR includes a scanner (not shown in the figure), the scanner makes detection light generated by the emitter module 110 rotating around a rotating shaft to implement scanning; and the first direction corresponds to a direction of the rotating shaft. Specifically, the scanner is configured to rotate the detection light along a horizontal direction. In such a case, the rotating shaft is perpendicular or approximately perpendicular to a horizontal plane. In such a case, the first direction is parallel to a straight line where the rotating shaft is located.

In some embodiments of this disclosure, the LiDAR is an integrally rotating LiDAR, and the rotating shaft is a rotating shaft around which the LiDAR rotates. In some other embodiments of this disclosure, the LiDAR is a rotating mirror LiDAR, and the rotating shaft is a rotating shaft of the rotating mirror.

As shown in FIG. 4, the detection method includes: performing step S 110 first, that is, sampling a signal outputted from each detector group, to determine a sampling result corresponding to each detector group.

In some embodiments of this disclosure, the detector includes a single photon avalanche diode. Based on the signal collection principle of the single photon avalanche diode, the step of sampling a signal outputted from each detector group includes: performing histogram sampling on the signal outputted from each detector group. The determined sampling result is a histogram corresponding to each detector group.

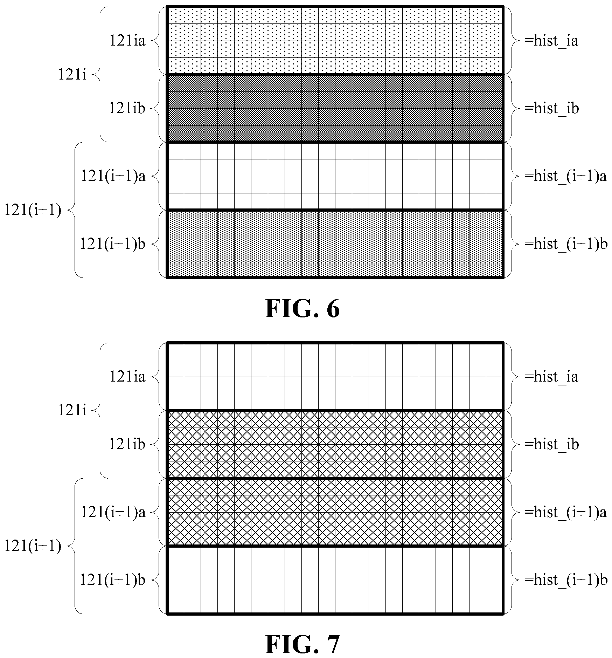

Referring to FIG. 6, a schematic diagram of two detector units in the detection method of a LiDAR shown in the embodiment of FIG. 5 is shown.

FIG. 6 shows a detector unit 121i and a detector unit 121(i+1) of the LiDAR. Each of the detector units includes two detector groups. The detector unit 121i includes a detector group 121ia and a detector group 121ib, and the detector unit 121(i+1) includes a detector group 121(i+1)a and a detector group 121(i+1)b.

A sampling result determined by performing histogram sampling on a signal outputted from the detector group 121ia is a histogram hist_ia corresponding to the detector group 121ia; a sampling result determined by performing histogram sampling on a signal outputted from the detector group 121ib is a histogram hist_ib corresponding to the detector group 121ib; a sampling result determined by performing histogram sampling on a signal outputted from the detector group 121(i+1)a is a histogram hist_(i+1)a corresponding to the detector group 121(i+1)a; and a sampling result determined by performing histogram sampling on a signal outputted from the detector group 121(i+1)b is a histogram hist_(i+1)b corresponding to the detector group 121(i+1)b.

Continuing to refer to FIG. 4, after the sampling result corresponding to each detector group is determined, step S 120 is performed, that is, a point cloud map is determined based on sampling results corresponding to all of the detector groups.

There is one-to-one correspondence between the multiple detector units and the multiple emitter units to form physical channels, that is, the number of the detector units is equal to the number of the emitter units. Each of the detector units includes multiple detector groups, and accordingly, the number of the detector groups is a multiple of the number of the emitter units. In such a case, the point cloud density of the point cloud map determined based on the sampling results corresponding to all of the detector groups is bound to be greater than the point cloud density of the existing point cloud map determined based on the physical channels, that is, the implementation of determining the point cloud map using the sampling result determined based on the signal outputted from each detector group can increase the point cloud density without increasing emission energy of the LiDAR, without increasing receiving area of the detectors, and without changing optical-mechanical structure of the LiDAR.

As shown in FIG. 4, after the step S 110 of determining a sampling result corresponding to each detector group is performed, and before the step S 120 of determining a point cloud map is performed, the detection method further includes: performing step S131, that is, combining sampling results corresponding to multiple adjacent detector groups to determine mixed channel data. The multiple detector groups belong to different detector units.

The mixed channel data is determined based on the combination of the sampling results of the multiple adjacent detector groups. The determination of the mixed channel data is equivalent to increase of the number of detector units. Moreover, the mixed channel data determined based on real sampled waveforms not only can increase the density of the point cloud map, but also can effectively enhance the detection capacity for small signals, can effectively enhance the detection capacity for small signals at a middle position of a field of view corresponding to adjacent physical channels, and is conductive to improving the detection capacity.

It should be noted that the multiple detector groups belonging to different detector units means that among the multiple detector groups, some detector groups belong to one detector unit, and some detector groups belong to another detector unit. Moreover, the multiple detector groups are adjacent detector groups, and accordingly, the multiple different detector units to which the multiple detector groups belong are also bound to be adjacent detector units.

In some embodiments of this disclosure, at the step of combining the sampling results corresponding to the multiple adjacent detector groups, the multiple detector groups belong to two adjacent detector units. That is, among the multiple detector groups, some detector groups belong to one detector unit, and the rest of the detector groups belong to another adjacent detector unit.

Specifically, in some embodiments of this disclosure, histogram sampling is performed on the signal outputted from each detector group to determine a histogram sampling result. In such a case, at the step of combining the sampling results corresponding to the multiple adjacent detector groups, the histogram corresponding to each detector group is accumulated.

Referring to FIG. 7, a schematic diagram of determination of mixed channel data in the detection method of a LiDAR shown in the embodiment of FIG. 6 is shown.

As mentioned above, after the detector unit 121i including the detector group 121ia and the detector group 121ib and the detector unit 121(i+1) including the detector group 121(i+1)a and the detector group 121(i+1)b are sampled respectively, four histograms can be determined, namely histogram hist_ia, histogram hist_ib, histogram hist_(i+1)a, and histogram hist_(i+1)b.

In some embodiments of this disclosure, at the step S131 of combining sampling results corresponding to multiple adjacent detector groups, the mixed channel data ch_i(i+1) is the accumulation of the histogram hist_ib of the detector group 121ib in the detector unit 121i and the histogram hist_(i+1)a of the detector group 121(i+1)a in the detector unit 121(i+1) (as shown by the cross-hatch filling in FIG. 7), that is, ch_i(i+1) = hist_ib + hist_(i+1)a.

It should be noted that, as mentioned above, in some embodiments of this disclosure, the multiple detector units 121 are arranged along a first direction. In such a case, at the step S131 of combining sampling results corresponding to multiple adjacent detector groups, the sampling results corresponding to the multiple adjacent detector groups along the first direction are combined.

Continuing to refer to FIG. 4, the detection method further includes: performing step S132, that is, combining sampling results corresponding to multiple detector groups in same detector unit to determine net channel data.

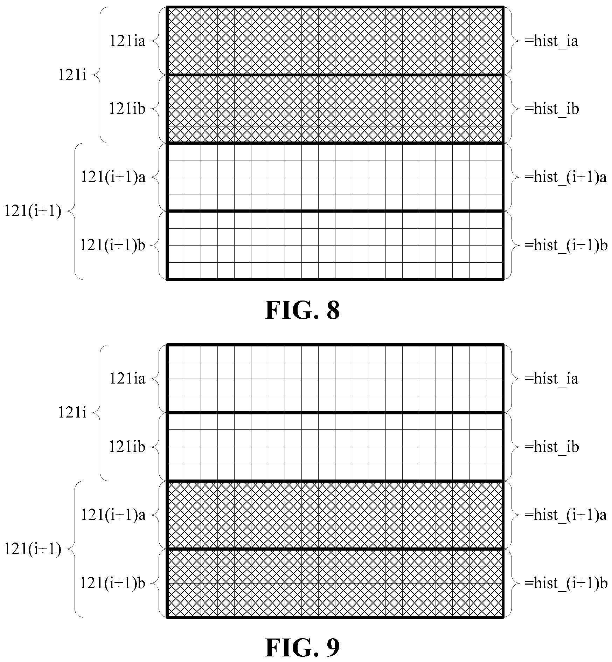

Referring to FIGS. 8 and 9, at the step S132 of combining sampling results corresponding to multiple detector groups in same detector unit, the histogram hist_ia of the detector group 121ia and the histogram hist_ib of the detector group 121ib in the detector unit 121i are accumulated to determine net channel data ch_ i (as shown by the cross-hatch filling in FIG. 8), that is, ch_i = hist_ia + hist_ib; and the histogram hist_(i+1)a of the detector group 121(i+1)a and the histogram hist_(i+1)b of the detector group 121(i+1)b in the detector unit 121(i+1) are accumulated to determine net channel data ch_(i+1) (as shown by the cross-hatch filling in FIG. 9), that is, ch_(i+1) = hist_(i+1)a + hist_(i+1)b. The net channel data is data outputted from the detector units with one-to-one correspondence to the emitter units.

When a small target is located at a position between a field of view corresponding to the detector unit 121i and a field of view corresponding to the detector unit 121(i+1), an echo of a complete target cannot be collected in sampling processes of the net channel data ch_i and the net channel data ch_(i+1). In such a case, in the net channel data ch_i and the net channel data ch_(i+1), a signal corresponding to the small target may fail to exceed a detection threshold, that is, the small target cannot be detected in the net channel data ch_i and the net channel data ch_(i+1). However, the echo of the complete target can be collected in a sampling process of mixed channel data ch_i (i+1). In such a case, the possibility that the signal corresponding to the small target exceeds the detection threshold is greatly increased, that is, the possibility for the small target to be discovered is greatly increased.

Continuing to refer to FIG. 4, after the sampling result is determined, the step S120 of determining a point cloud map based on all of the sampling results is performed. Specifically, in some embodiments of this disclosure, the sampling results corresponding to the multiple adjacent detector groups are combined to determine the mixed channel data. In such a case, at the step S120 of determining a point cloud map, the point cloud map is determined based on the mixed channel data.

In addition, in some embodiments of this disclosure, the sampling results corresponding to the detector groups in the same detector unit are further combined to determine the net channel data; and in such a case, at the step S120 of determining a point cloud map, the point cloud map is determined based on the net channel data and the mixed channel data.

Referring to FIGS. 7-9, two pieces of net channel data and one piece of mixed channel data, namely the net channel data ch_i, the net channel data ch_(i+1), and the mixed channel data ch_i(i+1), can be determined by permutation and combination of the detector unit 121i including the detector group 121ia and the detector group 121ib and the detector unit 121(i+1) including the detector group 121(i+1)a and the detector group 121(i+1)b. Compared with the existing technical solutions in which the detector units and the emitter units form the physical channels, the number of the determined channel data is increased currently from 2 to 3, that is, the determination of the mixed channel data is equivalent to the increase of the number of detector units. It can be seen that the point cloud density can be increased by providing the detector groups and combining the mixed channel data and the net channel data, without increasing the number of physical channels and without increasing the optical-mechanical complexity of the LiDAR.

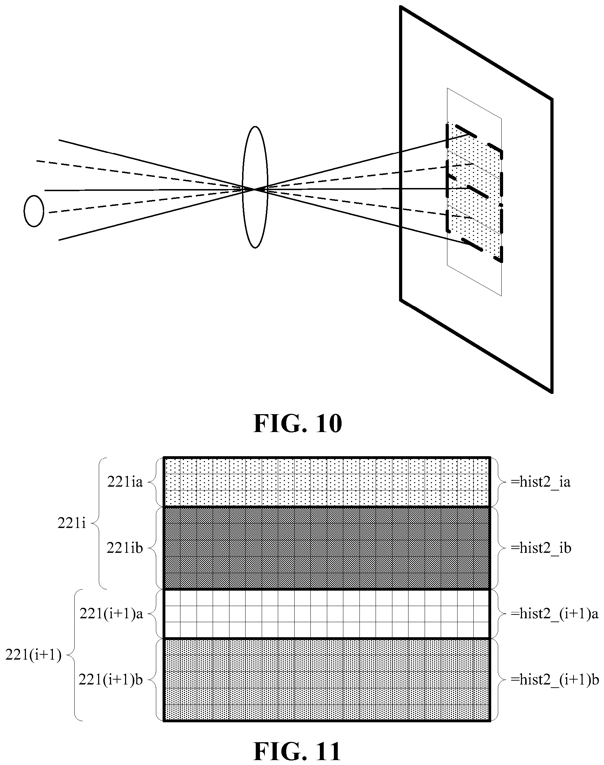

In such a case, as shown in FIG. 10, the point cloud map determined based on the mixed channel data determined by combining the sampling results corresponding to multiple detector groups arranged along a vertical direction (that is, a direction parallel to the rotating shaft), and on the net channel data determined by combining the sampling results corresponding to the multiple detector groups in the same detector unit not only can increase the point cloud density without increasing the emission energy of the LiDAR, without increasing the receiving area of the detectors, without changing the optical-mechanical structure of the LiDAR, and without increasing the scanning frequency, but also can effectively enhance the detection for small signals at the middle position of the field of view corresponding to adjacent physical channels (dashed boxes in the figure represent two mixed channels formed by the detector groups), which is conductive to improving the detection capacity.

Specifically, the number of physical channels of the LiDAR is N, that is, there is one-to-one correspondence between N emitter units and N detector units to form physical channels, and each of the detector units 121 includes two detector groups. In such a case, N pieces of net channel data and (N-1) pieces of mixed channel data can be determined based on the N physical channels. In such a case, at the step S120 of determining a point cloud map, the point cloud map is determined based on the (2*N-1) pieces of channel data.

It should be noted that in the above-mentioned embodiments, each of the detector units 121 includes two detector groups, and each of the detector groups includes an equal number of detectors, that is, at the step of combining the sampling results corresponding to multiple adjacent detector groups, the combination is performed by half-channel accumulation. However, the way the detector groups are provided is only an example. In other embodiments of this disclosure, the detector groups may also be provided in other ways.

Referring to FIG. 11, a schematic diagram of two detector units in a detection method of a LiDAR in another embodiment of this disclosure is shown.

The LiDAR includes a detector unit 221i and a detector unit 221(i+1), and each of the detector units includes two detector groups. In a same detector unit, different detector groups include different numbers of detectors, that is, in the detector unit 221i, the number of detectors in a detector group 221ia is not equal to the number of detectors in a detector group 221ib, and in the detector unit 221(i+1), the number of detectors in a detector group 221(i+1)a is not equal to the number of detectors in a detector group 221(i+1)b.

In some embodiments of this disclosure, each of the detector units includes: detectors in a rows and b columns, where a and b are each a positive integer, and at least one of a and b is greater than 1. At the step of combining the sampling results corresponding to multiple adjacent detector groups, the multiple combined detector groups include: detectors in a rows and b columns. In a process of determining the mixed channel data, the combined detector groups have same detector arrangement as the detector units, in such a case, the sampling area can be improved or ensured, and the ranging capacity can be improved or ensured.

As shown in FIG. 11, at the step of combining the sampling results corresponding to multiple adjacent detector groups, the physical channels are accumulated at a ratio of 3:5, that is, 3/8 part is selected from one channel for accumulation, and 5/8 part is selected from another channel for accumulation.

Specifically, a sampling result corresponding to the detector group 221ib in the detector unit 221i is combined with a sampling result corresponding to the detector group 221(i+1)a in the detector unit 221(i+1). A sum of the number of detectors in the detector group 221ib and the number of detectors in the detector group 221(i+1)a is equal to a sum of the number of detectors in the detector unit 221i or the detector unit 221(i+1), and an overall arrangement of the combination of the detectors in the detector group 221ib and in the detector group 221(i+1)a is also same as an arrangement of the detector unit 221i or the detector unit 221(i+1), that is, the number of rows and the number of columns in the arrangement of the combination of the detectors in the detector group 221ib and in the detector group 221(i+1)a are equal to the number of rows and the number of columns in the arrangement of the detectors in the detector unit 221i or in the detector unit 221(i+1) respectively.

Specifically, the detector unit 221i includes a detector group 221ia and a detector group 221ib, which are sampled respectively to determine two histograms, namely histogram hist2_ia and histogram hist2_ib; and the detector unit 221(i+1) includes a detector group 221(i+1)a and a detector group 221(i+1)b, which are sampled respectively to determine two histograms, namely histogram hist2_(i+1)a and histogram hist2_(i+1)b. The mixed channel data ch2_i(i+1) is the accumulation of the histogram hist2_ib of the detector group 221ib in the detector unit 221i and the histogram hist2_(i+1)a of the detector group 221(i+1)a in the detector unit 221(i+1), that is, ch2_i(i+1) = hist2_ib + hist2_(i+1)a.

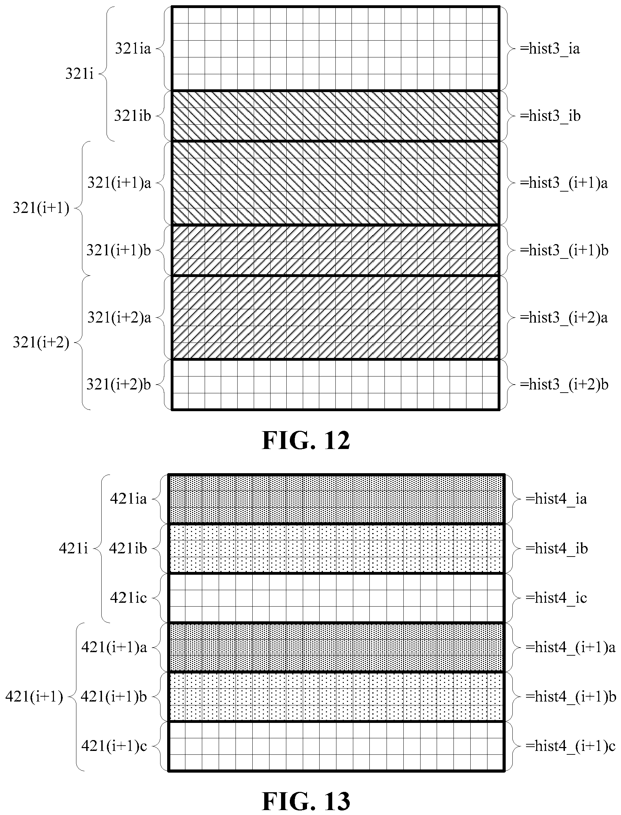

Referring to FIG. 12, a schematic diagram of three detector units in a detection method of a LiDAR in yet another embodiment of this disclosure is shown.

In the LiDAR, each of the detector units includes two detector groups; and in a same detector unit, different detector groups include different numbers of detectors.

Specifically, the LiDAR includes a detector unit 321i, a detector unit 321(i+1), and a detector unit 321(i+2) (as shown). The detector unit 321i includes a detector group 321ia and a detector group 321ib; the detector unit 321(i+1) includes a detector group 321(i+1)a and a detector group 321(i+1)b; and the detector unit 321(i+2) includes a detector group 321(i+2)a and a detector group 321(i+2)b.

In some embodiments of this disclosure, at the step of combining the sampling results corresponding to the multiple adjacent detector groups, the multiple detector groups combined to determine different mixed channel data each includes an equal number of detectors. By determining the mixed channel data based on the equal number of detectors, the stable ranging capacity of the detection method can be improved or ensured, and the ranging capacity can be improved or ensured advantageously.

As shown in FIG. 12, at the step of combining the sampling results corresponding to the multiple adjacent detector groups, a sampling result corresponding to the detector group 321ib in the detector unit 321i is combined with a sampling result corresponding to the detector group 321(i+1)a in the detector unit 321(i+1) (as shown by the right slash filling in FIG. 12); and a sampling result corresponding to the detector group 321(i+1)b in the detector unit 321(i+1) is combined with a sampling result corresponding to the detector group 321 (i+2)a in the detector unit 321(i+2) (as shown by the left slash filling in FIG. 12). A sum of the number of detectors in the detector group 321ib and the number of detectors in the detector group 321(i+1)a is equal to a sum of the number of detectors in the detector group 321(i+1)b and the number of detectors in the detector group 321(i+2)a.

Specifically, the detector unit 321i includes a detector group 321ia and a detector group 321ib, the detector unit 321(i+1) includes a detector group 321(i+1)a and a detector group 321(i+1)b, and the detector unit 321(i+2) includes a detector group 321(i+2)a and a detector group 321(i+2)b, all of them are sampled respectively to determine six histograms, namely histogram hist3_ia, histogram hist3_ib, histogram hist3_ (i+1)a, histogram hist3_(i+1)b, histogram hist3_(i+2)a, and histogram hist3_(i+2)b.

The mixed channel data ch3_i(i+1) is the accumulation of the histogram hist3_ib of the detector group 321ib in the detector unit 321i and the histogram hist3_(i+1)a of the detector group 321(i+1)a in the detector unit 321(i+1), that is, ch3_i(i+1) = hist3_ib + hist3(i+1)a.

The mixed channel data ch3_(i+1)(i+2) is the accumulation of the histogram hjst3_(i+1)b of the detector group 321(i+1)b in the detector unit 321(i+1) and the histogram hjst3_(i+2)a of the detector group 321(i+2)a in the detector unit 321(i+2), that is, ch3_(i+1)(i+2) = hjst3_(i+1)b + hjst3_(i+2)a.

It should be noted that in the above-mentioned embodiments, the multiple detector groups combined to determine different mixed channel data belong to three consecutive detector units respectively. However, in other embodiments of this disclosure, multiple detector groups combined to determine different mixed channel data and each including the equal number of detectors may also belong to non-consecutive detector units, respectively.

It should be further noted that in the above-mentioned embodiments, each of the detector units includes two detector groups. However, the way the detector groups are provided is only an example. In other embodiments of this disclosure, three or more detector groups may be provided in each of the detector units.

Referring to FIGS. 13-17, a schematic diagram of two detector units in a detection method of a LiDAR in yet another embodiment of this disclosure is shown.

In the LiDAR, each of the detector units includes three detector groups. Specifically, the LiDAR includes a detector unit 421i and a detector unit 421(i+1); the detector unit 421i includes a detector group 421ia, a detector group 421ib, and a detector group 421ic; and the detector unit 421(i+1) includes a detector group 421(i+1)a, a detector group 421(i+1)b, and a detector group 421(i+1)c.

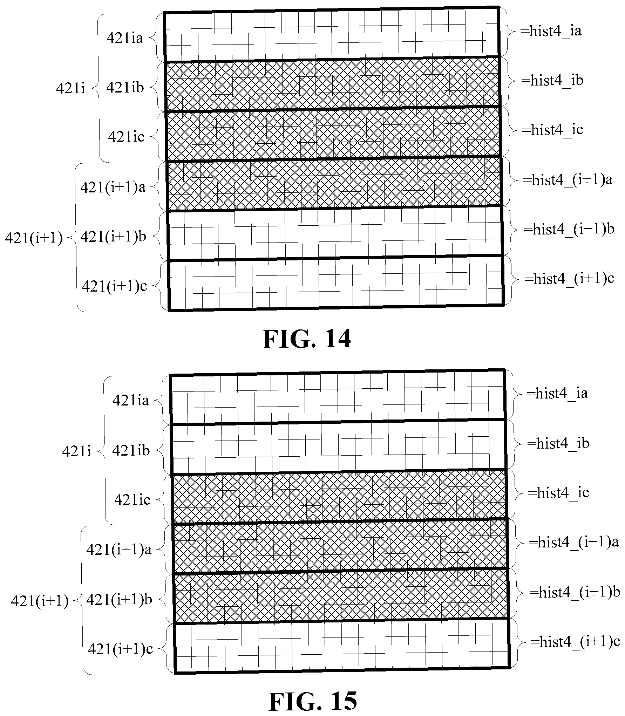

As shown in FIGS. 14 and 15, at the step of combining the sampling results corresponding to multiple adjacent detector groups, a sampling result corresponding to the detector group 421ib and a sampling result corresponding to the detector group 421ic in the detector unit 421i are combined with a sampling result corresponding to the detector group 421(i+1)a in the detector unit 421(i+1) (as shown by the cross-hatch filling in FIG. 14); and the sampling result corresponding to the detector group 421ic in the detector unit 421i is combined with the sampling result corresponding to the detector group 421(i+1)a in the detector unit 421(i+1) and a sampling result corresponding to the detector group 421(i+1)b in the detector unit 421(i+1) (as shown by the cross-hatch filling in FIG. 15).

Specifically, the detector unit 421i and the detector unit 421(i+1) each includes three detector groups, all of them are sampled respectively to determine six histograms, namely histogram hist4_ia, histogram hist4_ib, histogram hist4_ic, histogram hist4_(i+1)a, histogram hist4_(i+1)b, and histogram hist4_(i+1)c.

The mixed channel data ch4_i(i+1)_bca is the accumulation of the histogram hist4_ib of the detector group 421ib and the histogram hist4_ic of the detector group 421ic in the detector unit 421i with the histogram hist4_(i+1)a of the detector group 421(i+1)a in the detector unit 421(i+1), that is, ch4_i(i+1)_bca = hist4_ib + hist4_ic + hist4_(i+1)a; and the mixed channel data ch4_i(i+1)_cab is the accumulation of the histogram hist4_ic of the detector group 421ic in the detector unit 421i with the histogram hist4_(i+1)a of the detector group 421(i+1)a and the histogram hist4_(i+1)b of the detector group 421(i+1)b in the detector unit 421(i+1), that is, ch4_i(i+1)_cab = hist4_ic + hist4_(i+1)a + hist4_(i+1)b.

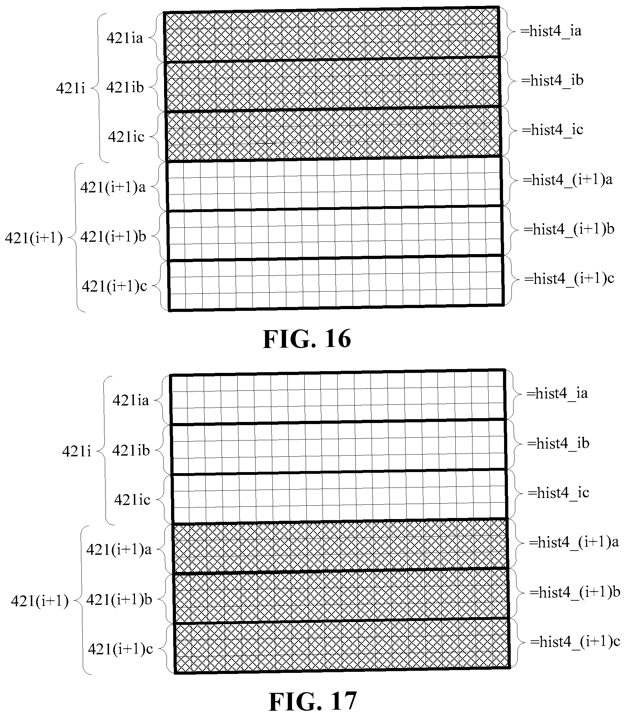

As shown in FIGS. 16 and 17, at the step of combining the sampling results corresponding to multiple detector groups in same detector unit, sampling results respectively corresponding to the detector group 421ia, the detector group 421ib, and the detector group 421ic in the detector unit 421i are combined (as shown by the cross-hatch filling in FIG. 16) to determine net channel data ch4_i; and sampling results respectively corresponding to the detector group 421(i+1)a, the detector group 421(i+1)b, and the detector group 421(i+1)c in the detector unit 421(i+1) are combined (as shown by the cross-hatch filling in FIG. 17) to determine net channel data ch4_(i+1).

The net channel data ch4_i is the accumulation of the histogram hist4_ia of the detector group 421ia, the histogram hist4_ib of the detector group 421ib, and the histogram hist4_ic of the detector group 421ic in the detector unit 421i, that is, ch4_i = hist4_ia + hist4_ib + hist4_ic; and the net channel data ch4_(i+1) is the accumulation of the histogram hist4_(i+1)a of the detector group 421(i+1)a, the histogram hist4_(i+1)b of the detector group 421(i+1)b, and the histogram hist4_(i+1)c of the detector group 421(i+1)c in the detector unit 421(i+1), that is, ch4_(i+1) = hist4_(i+1)a + hist4_(i+1)b + hist4_(i+1)c.

It can be seen that three detector groups are provided in each of the detector units. After the sampling results corresponding to the multiple adjacent detector groups are combined, two pieces of mixed channel data can be determined; and after the sampling results corresponding to the multiple detector groups in the same detector unit are combined, two pieces of net channel data can be determined, that is, four pieces of channel data can be determined from the original two physical channels. That is, he determination of the mixed channel data is equivalent to the increase of the number of detector units. In such a case, when the number of physical channels of the LiDAR is N, different combinations performed on the sampling results can determine N pieces of net channel data and (2*N-2) pieces of mixed channel data, that is, (3*N-2) pieces of channel data can be determined from the N physical channels to determine the point cloud map.

By analogy, the number of physical channels of the LiDAR is N, and M detector groups are provided in each of the detector units. After the sampling results corresponding to the multiple detector groups in the same detector unit are combined, N pieces of net channel data can be determined; and after the sampling results corresponding to the multiple adjacent detector groups are combined, at most [(M-1)*(N-1)] pieces of mixed channel data can be determined. In such a case, M*(N-1)+1 pieces of channel data can be determined from the N physical channels to determine the point cloud map.

In addition, in some embodiments of this disclosure, the multiple detector units are arranged along a first direction, the first direction is parallel to a straight line where the rotating shaft is located, and the rotating shaft is perpendicular or approximately perpendicular to a horizontal plane. At the step of combining the sampling results corresponding to multiple adjacent detector groups, the sampling results corresponding to the multiple adjacent detector groups along the first direction are combined, that is, at the step of combining the sampling results corresponding to multiple adjacent detector groups, sampling results corresponding to multiple adjacent detector groups along a vertical direction are combined.

However, the above-mentioned way of combination is only an example. In other embodiments of this disclosure, at the step of combining the sampling results corresponding to multiple adjacent detector groups, sampling results corresponding to multiple adjacent detector groups along a horizontal direction are combined, to increase the point cloud density in the horizontal direction.

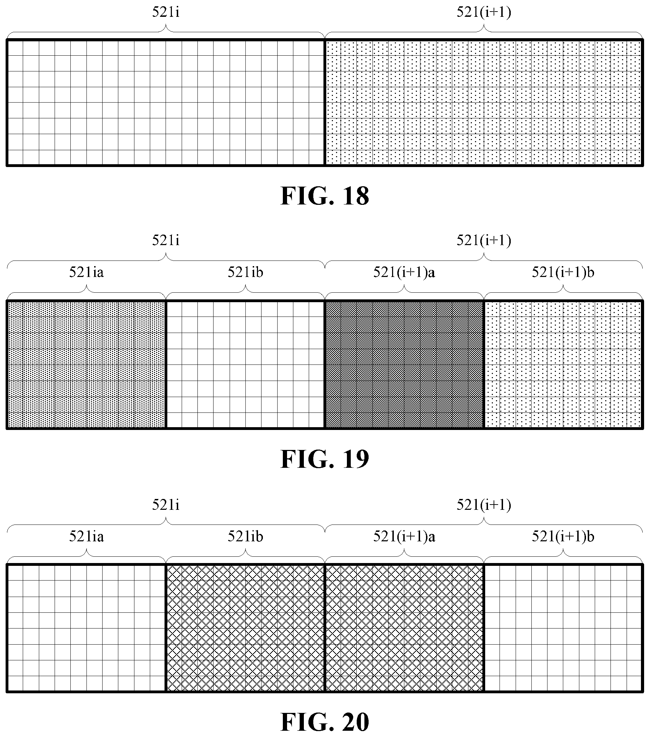

Referring to FIGS. 18-22, a schematic diagram of two detector units in a detection method of a LiDAR in yet another embodiment of this disclosure is shown.

As shown in FIGS. 18 and 19, the LiDAR includes a detector unit 521i and a detector unit 521(i+1). The detector unit 521i and the detector unit 521(i+1) are arranged along the horizontal direction. The detector unit 521i includes a detector group 521ia and a detector group 521ib; the detector unit 521(i+1) includes a detector group 521(i+1)a and a detector group 521(i+1)b, that is to say, the detector group 521ia, the detector group 521ib, the detector group 521(i+1)a, and the detector group 521(i+1)b are sequentially arranged along the horizontal direction.

As shown in FIG. 20, at the step of combining the sampling results corresponding to multiple adjacent detector groups, a sampling result corresponding to the detector group 521ib in the detector unit 521i and a sampling result corresponding to the detector group 521(i+1)a in the detector unit 521(i+1) which are adjacent along the horizontal direction are combined (as shown by the cross-hatch filling in FIG. 20).

Specifically, the detector unit 521i and the detector unit 521(i+1) each includes two detector groups, all of them are sampled respectively to determine four histograms, namely histogram hist5_ia, histogram hist5_ib, histogram hist5_(i+1)a, and histogram hist5_(i+1)b.

The mixed channel data ch5_i(i+1) is the accumulation of the histogram hist5_ib of the detector group 521ib in the detector unit 521i and the histogram hist5_(i+1)a of the detector group 521(i+1)a in the detector unit 521(i+1), that is, ch5_i(i+1) = hist5_ib + hist5(i+1)a.

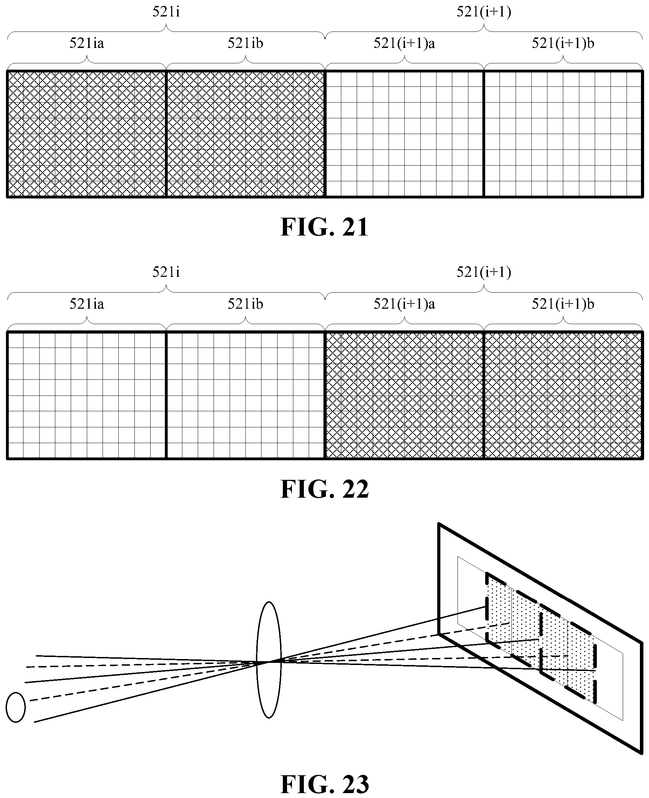

In addition, as shown in FIGS. 21 and 22, at the step of combining the sampling results corresponding to multiple detector groups in same detector unit, the sampling results respectively corresponding to the detector group 521ia and the detector group 521ib in the detector unit 521i are combined (as shown by the cross-hatch filling in FIG. 21) to determine net channel data ch5_i; and the sampling results respectively corresponding to the detector group 521(i+1)a and the detector group 521(i+1)b in the detector unit 521(i+1) are combined (as shown by the cross-hatch filling in FIG. 22) to determine net channel data ch5_(i+1).

The net channel data ch5_i is the accumulation of the histogram hist5_ia of the detector group 521ia and the histogram hist5_ib of the detector group 521ib in the detector unit 521i, that is, ch5_i = hist5_ia + hist5_ib; and the net channel data ch5_(i+1) is the accumulation of the histogram hist5_(i+1)a of the detector group 521(i+1)a and the histogram hist5_(i+1)b of the detector group 521(i+1)b in the detector unit 521(i+1), that is, ch5_(i+1) = hist5_(i+1)a + hist5_(i+1)b.

In such a case, as shown in FIG. 23, the point cloud map determined based on the mixed channel data determined by combining the sampling results corresponding to multiple detector groups arranged along a horizontal direction (that is, in a plane perpendicular to the rotating shaft), and on the net channel data determined by combining the sampling results corresponding to the multiple detector groups in the same detector unit not only can increase the point cloud density without increasing the emission energy of the LiDAR, without increasing the receiving area of the detectors, without changing the optical-mechanical structure of the LiDAR, and without increasing the scanning frequency, but also can effectively enhance the detection for small signals at the middle position of the field of view corresponding to adj acent physical channels (dashed boxes in the figure represent two mixed channels formed by the detector groups), which is conductive to improving the detection capacity.

It should be noted that in the above-mentioned embodiments, the multiple detector units are arranged along one of the vertical direction and the horizontal direction, and the detector groups in the detector units are arranged along one of the vertical direction and the horizontal direction. At the step of combining the sampling results corresponding to multiple adjacent detector groups, the sampling results corresponding to the multiple adjacent detector groups are combined. The multiple detector groups are arranged along one of the vertical direction and the horizontal direction.

In some other embodiments of this disclosure, the LiDAR is an area array LiDAR, that is, the detector module of the LiDAR includes a detector area array. The multiple detector units are arranged in an array, and each of the detector units includes: detector groups in multiple rows and multiple columns. The step of determining mixed channel data includes: combining sampling results corresponding to adjacent detector groups in the multiple rows to determine row mixed channel data, the detector groups in the multiple rows belonging to different detector units arranged along a row direction; and combining sampling results corresponding to adjacent detector groups in the multiple columns to determine column mixed channel data, the detector groups in the multiple columns belonging to different detector units arranged along a column direction. For the area array LiDAR, the point cloud density can be increased both in the row direction and in the column direction by the determination of the row mixed channel data and the column mixed channel data.

Accordingly, this disclosure further provides a LiDAR, specifically including: an emitter module including multiple emitter units; a detector module including multiple detector units, there being one-to-one correspondence between the multiple detector units and the multiple emitter units, each of the detector units including multiple detector groups; and a processor configured to implement the detection method of this disclosure.

Referring to FIG. 5, a schematic structural diagram of an emitter module and a detector module of a LiDAR in an embodiment of this disclosure is shown.

The emitter module 110 of the LiDAR includes multiple emitter units 111, the detector module 120 of the LiDAR includes multiple detector units 121, there is one-to-one correspondence between the multiple detector units 121 and the multiple emitter units 111, and each of the detector units 121 includes multiple detector groups (not shown in the figure).

There is one-to-one correspondence between the multiple detector units 121 and the multiple emitter units 111, that is, one of the detector units 121 and a corresponding emitter unit 111 have a same corresponding field of view in the far field. In such a case, the detector unit 121 and the corresponding emitter unit 111 form a physical channel.

Specifically, the detector unit 121 includes multiple detectors 122. Each of the detectors 122 is an independently addressed or independently controlled detector. That is to say, each of the detectors 122 can be independently powered on and independently led out. In some embodiments of this disclosure, the detector 122 may include: a single photon avalanche diode ("SPAD" device).

The detector unit 121 includes multiple detector groups. Each of the detector groups includes two or more of the detectors. Specifically, in the embodiment shown in FIG. 5, the detector unit 121 includes two detector groups, namely a detector group 121a and a detector group 121b.

The LiDAR further includes: a processor (not shown in the figure) configured to implement the detection method of this disclosure. Specifically, for specific technical solutions of the processor, reference can be made to the above-mentioned embodiments of the detection method, which are not repeated here in this disclosure.

In addition, this disclosure further provides a LiDAR. As shown in FIG. 5, the emitter module 110 of the LiDAR includes multiple emitter units 111, the detector module 120 of the LiDAR includes multiple detector units 121, there is one-to-one correspondence between the multiple detector units 121 and the multiple emitter units 111, and each of the detector units 121 includes multiple detector groups (not shown in the figure).

The emitter module 110 of the LiDAR is configured to generate detection light. The emitter module 110 includes multiple emitter units 111, and each of the emitter units 111 generates a detection light beam. The detection light generated by each emitter unit 111 covers a certain field range in a far field, that is, each emitter unit 111 corresponds to a field range in the far field.

The detector module 120 of the LiDAR is configured to receive echo light formed after the detection light is reflected. The detector module 120 includes multiple detector units 121. Each of the detector units 121 can receive the echo light within a certain field range in the far field, that is, each of the detector units 121 also corresponds to a field range in the far field.

There is one-to-one correspondence between the multiple detector units 121 and the multiple emitter units 111, that is, one of the detector units 121 and a corresponding emitter unit 111 have a same corresponding field of view in the far field. In such a case, the detector unit 121 and the corresponding emitter unit 111 form a physical channel.

Specifically, the emitter module 110 and the detector module 120 of the LiDAR shown in FIG. 5 include eight physical channels, that is, the emitter module 110 includes eight emitter units 111, namely 1st, 2nd, 3rd, ..., and 8th emitter units, and the detector module 120 includes eight detector units 121, namely 1st, 2nd, 3rd, ..., and 8th detector units.

There is one-to-one correspondence between the eight emitter units 111 and the eight detector units 121. Detection light generated by an emitter unit 111i of an i-th channel forms an echo after being reflected from an obstacle outside the radar, and the echo is received by a detector unit 121i of the i-th channel.

Specifically, the detector unit 121 includes multiple detectors 122. Each of the detectors 122 is an independently addressed or independently controlled detector. That is to say, each of the detectors 122 can be independently powered on and independently led out. In some embodiments of this disclosure, the detector 122 may include: a single photon avalanche diode ("SPAD" device).

The detector unit 121 includes multiple detector groups. Each of the detector groups includes two or more of the detectors. Specifically, in the embodiment shown in FIG. 5, the detector unit 121 includes two detector groups, namely a detector group 121a and a detector group 121b.

It should be noted that, as shown in FIG. 5, in some embodiments of this disclosure, the multiple detector units 121 are arranged along a first direction. That is to say, the multiple detector units 121 form a one-dimensional array along the first direction.

In addition, to implement scanning of a full field of view, in some embodiments of this disclosure, the LiDAR includes a scanner (not shown in the figure), the scanner rotates detection light generated by the emitter module 110 around a rotating shaft to implement scanning; and the first direction corresponds to a direction of the rotating shaft. Specifically, the scanner is configured to rotate the detection light along a horizontal direction. In such a case, the rotating shaft is perpendicular or approximately perpendicular to a horizontal plane. In such a case, the first direction is parallel to a straight line where the rotating shaft is located.

In some embodiments of this disclosure, the LiDAR is an integrally rotating LiDAR, and the rotating shaft is a rotating shaft around which the LiDAR rotates. In some other embodiments of this disclosure, the LiDAR is a rotating mirror LiDAR, and the rotating shaft is a rotating shaft of the rotating mirror.

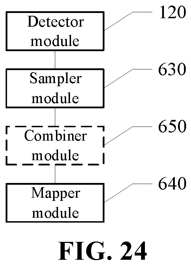

Referring to FIG. 24, a functional block diagram of the LiDAR shown in the embodiment of FIG. 5 is shown.

The LiDAR further includes: a sampler 630, the sampler 630 being configured to sample a signal outputted from each detector group, to determine a sampling result corresponding to each detector group; and a mapper 640, the mapper 640 being configured to determine a point cloud map based on sampling results corresponding to all of the detector groups.

As mentioned above, in some embodiments of this disclosure, each of the detectors includes a single photon avalanche diode. Based on the signal collection principle of the single photon avalanche diode, the sampler 630 performs histogram sampling on the signal outputted from each detector group, and the determined sampling result is a histogram corresponding to each detector group.

Referring to FIG. 6, a schematic diagram of two detector units in the LiDAR shown in the embodiment of FIG. 5 is shown.

FIG. 6 shows a detector unit 121i and a detector unit 121(i+1) of the LiDAR. Each of the detector units includes two detector groups. The detector unit 121i includes a detector group 121ia and a detector group 121ib, and the detector unit 121(i+1) includes a detector group 121(i+1)a and a detector group 121(i+1)b.

The sampler 630 performs histogram sampling on a signal outputted from the detector group 121ia, and the determined sampling result is a histogram hist_ia corresponding to the detector group 121ia; the sampler 630 performs histogram sampling on a signal outputted from the detector group 121ib, and the determined sampling result is a histogram hist_ib corresponding to the detector group 121ib; the sampler 630 performs histogram sampling on a signal outputted from the detector group 121(i+1)a, and the determined sampling result is a histogram hist_(i+1)a corresponding to the detector group 121(i+1)a; the sampler 630 performs histogram sampling on a signal outputted from the detector group 121(i+1)b, and the determined sampling result is a histogram hist_(i+1)b corresponding to the detector group 121(i+1)b.

Continuing to refer to FIG. 24, the mapper 640 receives the sampling results corresponding to all of the detector groups from the sampler 630; and the mapper 640 determines a point cloud map based on all of the sampling results.

There is one-to-one correspondence between the multiple detector units and the multiple emitter units to form physical channels, that is, the number of the detector units is equal to the number of the emitter units. Each of the detector units includes multiple detector groups, and accordingly, the number of the detector groups is a multiple of the number of the emitter units. In such a case, point cloud density of the point cloud map determined by the mapper 640 based on all of the sampling results is bound to be greater than point cloud density of the point cloud map determined currently based on physical channels, that is, for the LiDAR, a point cloud map with higher density can be determined without increasing the emission energy of the LiDAR, without increasing the receiving area of the detectors in the LiDAR, and without changing the optical-mechanical structure of the LiDAR.

As shown in FIG. 24, in some embodiments of this disclosure, the LiDAR further includes: a combiner 650, the combiner 650 being configured to combine sampling results corresponding to multiple adjacent detector groups to determine mixed channel data. The multiple detector groups belong to different detector units; and the mapper 640 determines the point cloud map based on the mixed channel data.

The combiner 650 can be equivalent to increase of the number of detector units. Moreover, the mixed channel data determined by the combiner 650 not only can increase the point cloud map density, but also can effectively enhance the detection capacity for small signals, can effectively enhance the detection capacity for small signals at a middle position of a field of view corresponding to adjacent physical channels, and is conductive to improving the detection capacity.

It should be noted that the multiple detector groups belonging to different detector units means that among the multiple detector groups combined by the combiner 650, some detector groups belong to one detector unit, and some detector groups belong to another detector unit. Moreover, the multiple detector groups are adjacent detector groups, and accordingly, the multiple different detector units to which the multiple detector groups belong are also bound to be adjacent detector units.

In some embodiments of this disclosure, the multiple detector groups combined by the combiner 650 belong to two adjacent detector units. That is, among the multiple detector groups, some detector groups belong to one detector unit, and the rest of the detector groups belong to another adjacent detector unit.

Specifically, in some embodiments of this disclosure, the sampler 630 performs histogram sampling on the signal outputted from each detector group to determine a histogram sampling result. In such a case, the combiner 650 accumulates the histogram corresponding to each detector group.

Referring to FIG. 7, a schematic diagram of determination of mixed channel data of the LiDAR shown in the embodiment of FIG. 6 is shown.

As mentioned above, the sampler 630 respectively performs sampling on the detector unit 121i including the detector group 121ia and the detector group 121ib and the detector unit 121(i+1) including the detector group 121(i+1)a and the detector group 121(i+1)b, to determine four histograms, namely histogram hist_ia, histogram hist_ib, histogram hist_(i+1)a, and histogram hist_(i+1)b.

In some embodiments of this disclosure, the combiner 650 accumulates the histogram hist_ib of the detector group 121ib in the detector unit 121i and the histogram hist_(i+1)a of the detector group 121(i+1)a in the detector unit 121(i+1) (as shown by the cross-hatch filling in FIG. 7) to determine mixed channel data ch_i(i+1), that is, ch_i(i+1) = hist_ib + hist_(i+1)a.

It should be noted that, as mentioned above, in some embodiments of this disclosure, the multiple detector units 121 are arranged along a first direction. In such a case, the combiner 650 combines sampling results corresponding to multiple adjacent detector groups along the first direction.

Continuing to refer to FIG. 24, the combiner 650 is further configured to combine sampling results corresponding to multiple detector groups in a same detector unit 121 to determine net channel data.

Referring to FIGS. 8 and 9, the combiner 650 accumulates the histogram hist_ia of the detector group 121ia and the histogram hist_ib of the detector group 121ib in the detector unit 121i to determine net channel data ch_i (as shown by the cross-hatch filling in FIG. 8), that is, ch_i = hist_ia + hist_ib; and the combiner 650 further accumulates the histogram hist_(i+1)a of the detector group 121(i+1)a and the histogram hist_(i+1)b of the detector group 121(i+1)b in the detector unit 121(i+1) to determine net channel data ch_(i+1) (as shown by the cross-hatch filling in FIG. 9), that is, ch_(i+1) = hist_(i+1)a + hist_(i+1)b. The net channel data is data outputted from the detector units with one-to-one correspondence to the emitter units.

When a small target is located at a position between a field of view corresponding to the detector unit 121i and a field of view corresponding to the detector unit 121(i+1), neither the net channel data ch_i nor the net channel data ch_(i+1) determined by the combiner 650 includes a complete echo of the small target. In such a case, in the net channel data ch_i and the net channel data ch_(i+1), a signal corresponding to the small target may fail to exceed a detection threshold, that is, the LiDAR fails to detect the small target based on the net channel data ch_i and the net channel data ch_(i+1). However, the mixed channel data ch_i(i+1) determined by the combiner 650 covers the complete echo of the small target. In such a case, the possibility that the signal corresponding to the small target exceeds the detection threshold is greatly increased, that is, the probability for the LiDAR to discover the small target is greatly increased.

Continuing to refer to FIG. 24, the mapper 640 receives the mixed channel data from the combiner 650. In such a case, the mapper 640 determines the point cloud map based on the mixed channel data. In addition, the mapper 640 further receives the net channel data from the combiner 650. In such a case, the mapper 640 determines the point cloud map based on the mixed channel data and the net channel data.

Referring to FIGS. 7-9, the combiner 650 can determine two pieces of net channel data and one piece of mixed channel data by permutation and combination of the detector unit 121i including the detector group 121ia and the detector group 121ib and the detector unit 121(i+1) including the detector group 121(i+1)a and the detector group 121(i+1)b, that is, the combiner 650 can determine the net channel data ch_i, the net channel data ch_(i+1), and the mixed channel data ch_i(i+1). Compared with the existing technical solutions in which the detector units and the emitter units form the physical channels, the number of the channel data of the LiDAR is increased currently from 2 to 3, that is, the determination of the mixed channel data is equivalent to the increase of the number of detector units. It can be seen that for the LiDAR, a point cloud map with higher density can be determined without increasing the number of physical channels and without increasing the optical-mechanical complexity of the LiDAR.

In such a case, as shown in FIG. 10, the point cloud map determined based on the mixed channel data determined by combining the sampling results corresponding to multiple detector groups arranged along a vertical direction (that is, a direction parallel to the rotating shaft), and on the net channel data determined by combining the sampling results corresponding to the multiple detector groups in the same detector unit not only can increase the point cloud density without increasing the emission energy of the LiDAR, without increasing the receiving area of the detectors, without changing the optical-mechanical structure of the LiDAR, and without increasing the scanning frequency, but also can effectively enhance the detection for small signals at the middle position of the field of view corresponding to adjacent physical channels, which is conductive to improving the detection capacity.

Specifically, the number of physical channels of the LiDAR is N, that is, there is one-to-one correspondence between N emitter units and N detector units to form physical channels, and each of the detector units 121 includes two detector groups. In such a case, N pieces of net channel data and (N-1) pieces of mixed channel data can be determined based on the N physical channels. In such a case, the mapper 640 determines the point cloud map based on the (2*N-1) pieces of channel data.

It should be noted that in the above-mentioned embodiments, each of the detector units 121 includes two detector groups, and each of the detector groups includes an equal number of detectors, that is, the combiner 650 performs combination by half-channel accumulation. However, this combiner is only an example. In other embodiments of this disclosure, the combiner 650 may also perform combination in other ways.

Referring to FIG. 11, a schematic diagram of two detector units of a LiDAR in another embodiment of this disclosure is shown.

The LiDAR includes a detector unit 221i and a detector unit 221(i+1), and each of the detector units includes two detector groups. In a same detector unit, different detector groups include different numbers of detectors, that is, in the detector unit 221i, the number of detectors in a detector group 221ia is not equal to the number of detectors in a detector group 221ib, and in the detector unit 221(i+1), the number of detectors in a detector group 221(i+1)a is not equal to the number of detectors in a detector group 221(i+1)b.

In some embodiments of this disclosure, each of the detector units includes: detectors in a rows and b columns, where a and b are each a positive integer, and at least one of a and b is greater than 1. The multiple detector groups combined by the combiner 650 include: detectors in a rows and b columns. The detector groups combined by the combiner 650 have same detector arrangement as the detector units, in such a case, the sampling area can be improved or ensured, and the ranging capacity of the LiDAR can be improved or ensured. As shown in FIG. 11, the combiner 650 accumulates physical channels at a ratio of 3:5, that is, the combiner 650 selects 3/8 part from one channel, and 5/8 part from another channel for accumulation.

Specifically, the combiner 650 combines a sampling result corresponding to the detector group 221ib in the detector unit 221i with a sampling result corresponding to the detector group 221(i+1)a in the detector unit 221(i+1). A sum of the number of detectors in the detector group 221ib and the number of detectors in the detector group 221(i+1)a is equal to a sum of the number of detectors in the detector unit 221i or the detector unit 221(i+1), and an overall arrangement of the combination of the detectors in the detector group 221ib and in the detector group 221(i+1)a is also same as an arrangement of the detector unit 221i or the detector unit 221(i+1), that is, the number of rows and the number of columns in the arrangement of the combination of the detectors in the detector group 221ib and in the detector group 221(i+1)a are equal to the number of rows and the number of columns in the arrangement of the detectors in the detector unit 221i or in the detector unit 221(i+1) respectively.

Specifically, the sampler performs sampling on the detector group 221ia and the detector group 221ib in the detector unit 221i respectively to determine two histograms, namely histogram hist2_ia and histogram hist2_ib; and the sampler performs sampling on the detector group 221(i+1)a and the detector group 221(i+1)b in the detector unit 221(i+1) respectively to determine two histograms, namely histogram hist2_(i+1)a and histogram hist2_(i+1)b. The combiner 650 accumulates the histogram hist2_ib of the detector group 221ib in the detector unit 221i and the histogram hist2_(i+1)a of the detector group 221(i+1)a in the detector unit 221(i+1) to determine the mixed channel data ch2_i(i+1), that is, ch2_i(i+1) = hist2_ib + hist2_(i+1)a.

Referring to FIG. 12, a schematic diagram of three detector units of a LiDAR in yet another embodiment of this disclosure is shown. In the LiDAR, each of the detector units includes two detector groups; and in a same detector unit, different detector groups include different numbers of detectors. Specifically, the LiDAR includes a detector unit 321i, a detector unit 321(i+1), and a detector unit 321(i+2). The detector unit 321i includes a detector group 321ia and a detector group 321ib; the detector unit 321(i+1) includes a detector group 321(i+1)a and a detector group 321(i+1)b; and the detector unit 321(i+2) includes a detector group 321(i+2)a and a detector group 321(i+2)b.

In some embodiments of this disclosure, the multiple detector groups combined by the combiner 650 to determine different mixed channel data each includes an equal number of detectors. The combiner 650 determines the mixed channel data based on the equal number of detectors, to improve or ensure the stable ranging capacity of the detection method and improve or ensure the ranging capacity.

As shown in FIG. 12, the combiner 650 combines a sampling result corresponding to the detector group 321ib in the detector unit 321i with a sampling result corresponding to the detector group 321(i+1)a in the detector unit 321(i+1) (as shown by the right slash filling in FIG. 12); and the combiner 650 further combines a sampling result corresponding to the detector group 321(i+1)b in the detector unit 321(i+1) with a sampling result corresponding to the detector group 321 (i+2)a in the detector unit 321(i+2) (as shown by the left slash filling in FIG. 12). A sum of the number of detectors in the detector group 321ib and the number of detectors in the detector group 321(i+1)a is equal to a sum of the number of detectors in the detector group 321(i+1)b and the number of detectors in the detector group 321(i+2)a.

Specifically, the detector unit 321i includes a detector group 321ia and a detector group 321ib, the detector unit 321(i+1) includes a detector group 321(i+1)a and a detector group 321(i+1)b, and the detector unit 321(i+2) includes a detector group 321(i+2)a and a detector group 321(i+2)b, all of them are sampled respectively by the sampler to determine six histograms, namely histogram hist3 _ia, histogram hist3_ib, histogram hist3_(i+1)a, histogram hist3_(i+1)b, histogram hist3_(i+2)a, and histogram hist3_(i+2)b.

The combiner 650 accumulates the histogram hist3_ib of the detector group 321ib in the detector unit 321i and the histogram hist3_(i+1)a of the detector group 321(i+1)a in the detector unit 321(i+1) to determine the mixed channel data ch3_i(i+1), that is, ch3_i(i+1) = hist3_ib + hist3_(i+1)a.

The combiner 650 further accumulates the histogram hjst3_(i+1)b of the detector group 321(i+1)b in the detector unit 321(i+1) and the histogram hjst3_(i+2)a of the detector group 321(i+2)a in the detector unit 321(i+2) to determine the mixed channel data ch3_(i+1)(i+2), that is, ch3_(i+1)(i+2) = hjst3_(i+1)b + hjst3_(i+2)a.

It should be noted that in the above-mentioned embodiments, the multiple detector groups combined to determine different mixed channel data belong to three consecutive detector units respectively. However, in other embodiments of this disclosure, multiple detector groups combined to determine different mixed channel data and each including the equal number of detectors may also belong to non-consecutive detector units respectively.

It should be further noted that in the above-mentioned embodiments, each of the detector units includes two detector groups. However, the way the detector groups are provided is only an example. In other embodiments of this disclosure, three or more detector groups may be provided in each of the detector units.

Referring to FIGS. 13-17, a schematic diagram of two detector units of a LiDAR in yet another embodiment of this disclosure is shown.

In the LiDAR, each of the detector units includes three detector groups. Specifically, the LiDAR includes a detector unit 421i and a detector unit 421(i+1); the detector unit 421i includes a detector group 421ia, a detector group 421ib, and a detector group 421ic; and the detector unit 421(i+1) includes a detector group 421(i+1)a, a detector group 421(i+1)b, and a detector group 421(i+1)c.

As shown in FIGS. 14 and 15, the combiner 650 combines a sampling result corresponding to the detector group 421ib and a sampling result corresponding to the detector group 421ic in the detector unit 421i with a sampling result corresponding to the detector group 421(i+1)a in the detector unit 421(i+1) (as shown by the cross-hatch filling in FIG. 14); and the combiner 650 further combines the sampling result corresponding to the detector group 421ic in the detector unit 421i with the sampling result corresponding to the detector group 421(i+1)a in the detector unit 421(i+1) and a sampling result corresponding to the detector group 421(i+1)b in the detector unit 421(i+1) (as shown by the cross-hatch filling in FIG. 15).

Specifically, the sampler performs sampling on three detector groups respectively included in each of the detector unit 421i and the detector unit 421(i+1) respectively to determine six histograms, namely histogram hist4_ia, histogram hist4_ib, histogram hist4_ic, histogram hist4_(i+1)a, histogram hist4_(i+1)b, and histogram hist4_(i+1)c.

The combiner 650 accumulates the histogram hist4_ib of the detector group 421ib and the histogram hist4_ic of the detector group 421ic in the detector unit 421i with the histogram hist4_(i+1)a of the detector group 421(i+1)a in the detector unit 421(i+1) to determine the mixed channel data ch4_i(i+1)_bca, that is, ch4_i(i+1)_bca = hist4_ib + hist4_ic + hist4_(i+1)a. The combiner 650 further accumulates the histogram hist4_ic of the detector group 421ic in the detector unit 421i with the histogram hist4_(i+1)a of the detector group 421(i+1)a and the histogram hist4_(i+1)b of the detector group 421(i+1)b in the detector unit 421(i+1) to determine the mixed channel data ch4_i(i+1)_cab, that is, ch4_i(i+1)_cab = hist4_ic + hist4_(i+1)a + hist4_(i+1)b.

As shown in FIGS. 16 and 17, the combiner 650 combines sampling results respectively corresponding to the detector group 421ia, the detector group 421ib, and the detector group 421ic in the detector unit 421i (as shown by the cross-hatch filling in FIG. 16) to determine net channel data ch4_i; and the combiner 650 further combines sampling results respectively corresponding to the detector group 421(i+1)a, the detector group 421(i+1)b, and the detector group 421(i+1)c in the detector unit 421(i+1) (as shown by the cross-hatch filling in FIG. 17) to determine net channel data ch4_(i+1).

Specifically, the combiner 650 accumulates the histogram hist4_ia of the detector group 421ia, the histogram hist4_ib of the detector group 421ib, and the histogram hist4_ic of the detector group 421ic in the detector unit 421i to determine the net channel data ch4_i, that is, ch4_i = hist4_ia + hist4_ib + hist4_ic; and the combiner 650 further accumulates the histogram hist4_(i+1)a of the detector group 421(i+1)a, the histogram hist4_(i+1)b of the detector group 421(i+1)b, and the histogram hist4_(i+1)c of the detector group 421(i+1)c in the detector unit 421(i+1) to determine the net channel data ch4_(i+1), that is, ch4_(i+1) = hist4_(i+1)a + hist4_(i+1)b + hist4_(i+1)c.

It can be seen that three detector groups are provided in each of the detector units. The combiner 650 can determine two pieces of mixed channel data by combining sampling results corresponding to multiple adjacent detector groups; and the combiner 650 can determine two pieces of net channel data by combining sampling results corresponding to multiple detector groups in a same detector unit, that is, for the LiDAR originally with two physical channels, four pieces of channel data can be determined, that is, the determination of the mixed channel data is equivalent to increase of the number of detector units. In such a case, when the number of physical channels of the LiDAR is N, after performing different combinations, the combiner 650 can determine N pieces of net channel data and (2*N-2) pieces of mixed channel data, that is, for the LiDAR with N physical channels, a point cloud map based on (3*N-2) pieces of channel data can be determined.

By analogy, the number of physical channels of the LiDAR is N, and M detector groups are provided in each of the detector units. The combiner 650 can determine N pieces of net channel data by combining the sampling results corresponding to the multiple detector groups in the same detector unit; and the combiner 650 at most can determine [(M-1)*(N-1)] pieces of mixed channel data by combining the sampling results corresponding to the multiple adjacent detector groups. In such a case, for the LiDAR with N physical channels, a point cloud map based on M*(N-1)+1 pieces of channel data can be determined.

In addition, in some embodiments of this disclosure, the multiple detector units are arranged along a first direction, the first direction is parallel to a straight line where the rotating shaft is located, and the rotating shaft is perpendicular or approximately perpendicular to a horizontal plane. The combiner 650 combines the sampling results corresponding to the multiple adjacent detector groups along the first direction, that is, the combiner 650 combines sampling results corresponding to multiple adjacent detector groups along a vertical direction.

However, the above-mentioned way of combination is only an example. In other embodiments of this disclosure, the combiner 650 may further combine sampling results corresponding to multiple adjacent detector groups along a horizontal direction, to increase the point cloud density in the horizontal direction.

Referring to FIGS. 18-22, a schematic diagram of two detector units of a LiDAR in yet another embodiment of this disclosure is shown.

As shown in FIGS. 18 and 19, the LiDAR includes a detector unit 521i and a detector unit 521(i+1). The detector unit 521i and the detector unit 521(i+1) are arranged along the horizontal direction. The detector unit 521i includes a detector group 521ia and a detector group 521ib; the detector unit 521(i+1) includes a detector group 521(i+1)a and a detector group 521(i+1)b, that is to say, the detector group 521ia, the detector group 521ib, the detector group 521(i+1)a, and the detector group 521(i+1)b are sequentially arranged along the horizontal direction.

As shown in FIG. 20, the combiner 650 combines a sampling result corresponding to the detector group 521ib in the detector unit 521i and a sampling result corresponding to the detector group 521(i+1)a in the detector unit 521(i+1) which are adjacent along the horizontal direction (as shown by the cross-hatch filling in FIG. 20).

Specifically, the detector unit 521i and the detector unit 521(i+1) each includes two detector groups, all of them are sampled respectively by the sampler to determine four histograms, namely histogram hist5_ia, histogram hist5_ib, histogram hist5_(i+1)a, and histogram hist5_(i+1)b.

The combiner 650 accumulates the histogram hist5_ib of the detector group 521ib in the detector unit 521i and the histogram hist5_(i+1)a of the detector group 521(i+1)a in the detector unit 521(i+1) to determine the mixed channel data ch5_i(i+1), that is, ch5_i(i+1) = hist5_ib + hist5(i+1)a.

In addition, as shown in FIGS. 21 and 22, the combiner 650 combines sampling results respectively corresponding to the detector group 521ia and the detector group 521ib in the detector unit 521i (as shown by the cross-hatch filling in FIG. 21) to determine net channel data ch5_i; and the combiner 650 further combines sampling results respectively corresponding to the detector group 521(i+1)a and the detector group 521(i+1)b in the detector unit 521(i+1) (as shown by the cross-hatch filling in FIG. 22) to determine net channel data ch5_(i+1).

The combiner 650 accumulates the histogram hist5_ia of the detector group 521ia and the histogram hist5_ib of the detector group 521ib in the detector unit 521i to determine the net channel data ch5_i, that is, ch5_i = hist5_ia + hist5_ib; and the combiner 650 further accumulates the histogram hist5_(i+1)a of the detector group 521(i+1)a and the histogram hist5_(i+1)b of the detector group 521(i+1)b in the detector unit 521(i+1) to determine the net channel data ch5_(i+1), that is, ch5_(i+1) = hist5_(i+1)a + hist5_(i+1)b.

In such a case, as shown in FIG. 23, the point cloud map determined by the mapper based on the mixed channel data determined by combining sampling results corresponding to multiple detector groups arranged along a horizontal direction (that is, in a plane perpendicular to the rotating shaft), and the net channel data determined by combining the sampling results corresponding to the multiple detector groups in the same detector unit by the combiner 650 not only can increase the point cloud density without increasing the emission energy of the LiDAR, without increasing the receiving area of the detectors, without changing the optical-mechanical structure of the LiDAR, and without increasing the scanning frequency, but also can effectively enhance the detection for small signals at the middle position of the field of view corresponding to adjacent physical channels, which is conductive to improving the detection capacity

It should be noted that in the above-mentioned embodiments, the multiple detector units are arranged along one of the vertical direction and the horizontal direction, and the detector groups in the detector units are arranged along one of the vertical direction and the horizontal direction. The combiner 650 combines the sampling results corresponding to the multiple adjacent detector groups. The multiple detector groups are arranged along one of the vertical direction and the horizontal direction.

In some other embodiments of this disclosure, the LiDAR is an area array LiDAR, that is, the detector module of the LiDAR includes a detector area array. The multiple detector units are arranged in an array, and each of the detector units includes: detector groups in multiple rows and multiple columns. The combiner 650 includes:

a row combiner configured to combine sampling results corresponding to adjacent detector groups in the multiple rows to determine row mixed channel data, detector groups in the multiple rows belonging to different detector units arranged along a row direction; and a column combiner configured to combine sampling results corresponding to adjacent detector groups in the multiple columns to determine column mixed channel data, detector groups in the multiple columns belonging to different detector units arranged along a column direction. For the area array LiDAR, the point cloud density can be increased both in the row direction and in the column direction by providing the row combiner and the column combiner unit.

To sum up, in the technical solutions of this disclosure, there is one-to-one correspondence between the multiple detector units and the multiple emitter units to form physical channels; the signal outputted from each detector group is sampled to determine a sampling result, and the point cloud map is determined based on sampling results of all of the detector groups. The multiple detector units and the multiple emitter units with one-to-one correspondence therebetween form the physical channels, that is, one of the detector units and a corresponding emitter unit have a same field of view in a far field. In such a case, the number of the detector units is equal to the number of the emitter units. The detector unit includes multiple detector groups, and accordingly, the number of the detector groups is bound to be greater than the number of the detector units, and also greater than the number of the emitter units. In such a case, the density of the point cloud map determined based on the sampling results of all of the detector groups is higher, that is, the point cloud density of the determined point cloud map is increased. In such a case, the implementation of determining the point cloud map using the sampling result determined based on the signal outputted from each detector group can increase the point cloud density without increasing emission energy of the LiDAR, without increasing receiving area of the detectors, and without changing optical-mechanical structure of the LiDAR.

Moreover, sampling results corresponding to multiple adjacent detector groups are combined to determine mixed channel data, after determining the sampling result corresponding to each detector group and before determining the point cloud map. The multiple detector groups belong to different detector units. The determination of the mixed channel data is equivalent to increase of the number of detector units, and the mixed channel data is used to increase the density based on real sampled waveforms, which can effectively enhance the detection capacity for small signals, can effectively enhance detection for small signals at a middle position of a field of view corresponding to adjacent physical channels, and is conductive to improving the detection capacity.

In addition, each of the detector units includes: detectors in a rows and b columns, where a and b are each a positive integer, and at least one of a and b is greater than 1. At the step of combining the sampling results corresponding to multiple adjacent detector groups, the multiple combined detector groups include: detectors in a rows and b columns. In a process of combining the sampling results, the number and area of the detectors included in the multiple combined detector groups are equal to the number and area of the detectors in the detector units, in such a case, the number of detectors can be improved or ensured effectively each time, and the ranging capacity can be improved or ensured advantageously.

Although this disclosure is disclosed as above, this disclosure is not limited to the above. Any person skilled in the art may make various changes and modifications without departing from the spirit and scope of this disclosure, and therefore the scope of protection of this disclosure shall be subject to the scope limited by the claims.

## Claims

1. A detection method of a LiDAR, wherein an emitter module of the LiDAR comprises a plurality of emitter units, a detector module of the LiDAR comprises a plurality of detector units, there is one-to-one correspondence between the plurality of detector units and the plurality of emitter units, the detector unit comprises a plurality of detector groups; and
the detection method comprises:
sampling a signal outputted from each detector group, to determine a sampling result corresponding to the detector group; and
determining a point cloud map based on sampling results corresponding to all of the detector groups.

2. The detection method of claim 1, further comprising:
combining sampling results corresponding to adjacent detector groups to determine mixed channel data, after determining the sampling result corresponding to each detector group and before determining the point cloud map, the detector groups belonging to different detector units; and
wherein at the step of determining the point cloud map, the point cloud map is determined based on the mixed channel data.

3. The detection method of claim 1 or 2, wherein each of the detector groups comprises a plurality of detectors; and each of the detectors is an independently addressed and independently controlled detector.

4. The detection method of claim 3, wherein at the step of combining the sampling results corresponding to the adjacent detector groups, each of the detector groups combined to determine different mixed channel data comprises an equal number of detectors.

5. The detection method of claim 3, wherein the detector comprises a single photon avalanche diode.

6. The detection method of claim 5, wherein the step of sampling the signal outputted from each detector group comprises: performing histogram sampling on the signal outputted from each detector group, and the determined sampling result is a histogram corresponding to each detector group; and
at the step of combining the sampling results corresponding to the plurality of adjacent detector groups, the histogram corresponding to each detector group is accumulated.

7. The detection method of claim 3, wherein each of the detector units comprises: detectors in a rows and b columns, where a and b are each a positive integer, and at least one of a and b is greater than 1; and
at the step of combining the sampling results corresponding to the adjacent detector groups, the plurality of combined detector groups comprise: detectors in a rows and b columns.

8. The detection method of claim 2, wherein the plurality of detector units are arranged along a first direction.

9. The detection method of claim 8, wherein at the step of combining the sampling results corresponding to the plurality of adjacent detector groups, sampling results corresponding to the plurality of adjacent detector groups along the first direction are combined.

10. The detection method of claim 8, wherein the LiDAR comprises a scanner, the scanner makes detection light generated by the emitter module rotating around a rotating shaft to scan; and
the first direction corresponds to a direction of the rotating shaft.

11. The detection method of claim 9 or 10, wherein the LiDAR is an integrally rotatory LiDAR or a rotating mirror LiDAR.

12. The detection method of claim 2, wherein the detector unit comprises: detector groups in a plurality of rows and a plurality of columns; and
the step of determining the mixed channel data comprises:
combining sampling results corresponding to adjacent detector groups in the plurality of rows, to determine row-mixed channel data, detector groups in the plurality of rows belonging to different detector units arranged along a row direction; and
combining sampling results corresponding to adjacent detector groups in the plurality of columns to determine column-mixed channel data, detector groups in the plurality of columns belonging to different detector units arranged along a column direction.

13. The detection method of claim 2, further comprising:
combining sampling results corresponding to a plurality of detector groups in a same detector unit to determine net channel data; and
determining the point cloud map based on the net channel data and the mixed channel data.

14. A LiDAR, comprising:
an emitter module comprising a plurality of emitter units;
a detector module comprising a plurality of detector units, wherein there is one-to-one correspondence between the plurality of detector units and the plurality of emitter units, and the detector unit comprises a plurality of detector groups; and
a processor configured to implement the detection method of any of claims 1-13.

15. A LiDAR, wherein an emitter module of the LiDAR comprises a plurality of emitter units, a detector module of the LiDAR comprises a plurality of detector units, there is one-to-one correspondence between the plurality of detector units and the plurality of emitter units, the detector unit comprises a plurality of detector groups; and
the LiDAR further comprises:
a sampler configure to sample a signal outputted from each detector group, to determine a sampling result corresponding to the detector group; and
a mapper configure to determine a point cloud map based on sampling results corresponding to all of the detector groups.

16. The LiDAR of claim 15, further comprising:
a combiner configured to combine sampling results corresponding to adjacent detector groups to determine mixed channel data, wherein the detector groups belong to different detector units; and
the mapper determines the point cloud map based on the mixed channel data.

17. The LiDAR of claim 15 or 16, wherein each of the detector groups comprises a plurality of detectors; and each of the detectors is an independently addressed or independently controlled detector.

18. The LiDAR of claim 17, wherein the plurality of detector groups combined by the combiner to determine different mixed channel data each comprises an equal number of detectors.

19. The LiDAR of claim 18, wherein the detectors comprise a single photon avalanche diode.

20. The LiDAR of claim 17, wherein the detector unit comprises: detectors in a rows and b columns, where a and b are each a positive integer, and at least one of a and b is greater than 1; and
the plurality of detector groups combined by the combiner comprise: detectors in a rows and b columns.

21. The LiDAR of claim 16, wherein the plurality of detector units are arranged along a first direction.

22. The LiDAR of claim 21, wherein the combiner combines sampling results corresponding to adjacent detector groups along the first direction.

23. The LiDAR of claim 22, wherein the LiDAR comprises a scanner, the scanner makes detection light generated by the emitter module rotating around a rotating shaft to scan; and
the first direction corresponds to a direction of the rotating shaft.

24. The LiDAR of claim 22 or 23, wherein the LiDAR is an integrally rotatory LiDAR or a rotating mirror LiDAR.

25. The LiDAR of claim 16, wherein each of the detector units comprises: detector groups in a plurality of rows and a plurality of columns; and
the combiner comprises:
a row combiner configure to combine sampling results corresponding to adjacent detector groups in the plurality of rows to determine row mixed channel data, detector groups in the plurality of rows belonging to different detector units arranged along a row direction; and
a column combiner configure to combine sampling results corresponding to adjacent detector groups in the plurality of columns to determine column mixed channel data, detector groups in the plurality of columns belonging to different detector units arranged along a column direction.
